# EUROPEAN PATENT APPLICATION

(11) **EP 0 734 654 A1**
(43) Date of publication of application: **02.10.1996**
(21) Application number: 96302043.3
(22) Date of filing: 25.03.1996
(51) Int. Cl.: A23D 7/015

(54) **Reduced fat tablespread**

(30) Priority: 28.03.1995 US 411980
(71) Applicant: KRAFT FOODS, INC., White Plains New York 10625 (US)
(72) Inventor: Mill, Mark Stuart, Arlington Heights, Illinois 60004 (US)
(74) Representative: Eyles, Christopher Thomas

(57) **Abstract**

The present invention is directed to a low-fat spreadable margarine-type gel matrix which has crystallized fat particles suspended therein. The margarine-type product of the invention includes a gelling type maltodextrin, a fat which is solid at room temperature and water. In a method for manufacture of the edible margarine-type product, a mixture of maltodextrin and water is provided. The mixture is heated to an elevated temperature of from about 180°F to about 200°F (about 82.2°C to about 93.3°C) and is held at the elevated temperature for a period of from about 10 minutes to about 30 minutes. A fat which is solid at room temperature is added to the mixture at a temperature above the melting point of the fat. The mixture is agitated for a time sufficient to melt the fat and disperse the fat in the mixture. The mixture is then cooled with shear to provide a margarine-type product which is an aqueous gelled matrix of embedded crystalline fat particles.

## Description

### Field of the Invention

The present invention relates generally to a process to enhance or potentiate the fatty mouthfeel of low fat products. In particular, the invention is directed to providing a product that has the appearance, texture and organoleptic properties of margarine, but which has a fat content of less than about 20%. The margarine-type products of this invention are based on an aqueous gel matrix with non-emulsified fat particles dispersed therein in a manner so that the mouthfeel of the product is similar to margarine-type products containing higher levels of fat.

### Background of the Invention

Spreadable emulsions which are used as substitutes for butter have generally become classified according to their oil content. Margarine contains not less than 80% fat as set forth in the standards of identity of the Federal Food, Drug and Cosmetic Act, 21 C.F.R. §166.110. The margarine is produced by admixing of two phases, oil and aqueous. The oil blending may be done by the refiner or the margarine manufacturer and color may be added, generally carotene to the oil, as well as vitamins and emulsifiers. About 16-18% skim milk or water, plus flavorants, salt and preservatives may be used in the liquid phase. Diet margarines must have at least one-third less calories than conventional margarine, and whereas whey or milk powder may be used in margarine they cannot be used in diet margarine because these ingredients have the effect of breaking the emulsion. The diet margarines contain about 60% of water and between about 30-40% of oil.

The so-called "spreads" are between margarine and diet margarine in oil content and thus contain between about 40 and 80% of oil.

The diet margarines and the "spreads", which are generally sold in plastic tubs, while having less calories than margarine, are less desirable than margarine from the standpoint of taste and mouthfeel.

The reduction in caloric content is generally achieved in these prior art products by increasing the water content and lowering the fat content of the products to the range of about 40% to about 60%. In order to obtain such fat contents, the addition of various emulsifiers and/or other ingredients to maintain a stable, plastic emulsion of the water-in-oil type is generally required. Further reduction in fat content and caloric content, while desired, has been most difficult to achieve because of problems in maintaining the oil as the continuous phase which is required so that the product exhibits natural texture and mouthfeel. Moreover, the combination of fats and emulsifiers and/or other ingredients such as hydrocolloids employed in a number of prior art low calorie spreads impart a waxy mouthfeel and provide melting characteristics bearing little resemblance to conventional margarines of natural butter.

U.S. Patent No. 4,536,408 to Morehouse, et al. describes a low fat spread using a non-gelled starch hydrolyzate having a DE (dextrose equivalent) of about 4 and not more than 25. This spread contained 15 to 35 percent starch hydrolyzate and 15% to 35% edible fat.

U.S. Patent No. 4,226,894 to Miller, et al. describes a non-pourable, flavored, spreadable emulsion comprising 8% to 15% vegetable fat, water and sweetening agent, in the proportion of about 3-4:1 sweetening agent to water in addition to a stabilizer. Maltodextrin was suggested as a sweetening agent component.

In U.S. Patent No. 4,414,229 to Bakal, et al., maltodextrins were found to be suitable carriers for flavors to be used in margarine.

In U.S. Patent No. 4,238,520 to Miller, et al., a fat spread was prepared by using thickening agents such as cellulose ethers, gums, starch and starch derivatives, alin, etc. This spread contained 20% to 40% fat.

U.S. Patent No. 4,869,919 to Lowery disclosed spread compositions which comprise an edible fat, a maltodextrin having a DE of greater than about 4 and less than about 20, water and a minor amount of an emulsifier. The fat is present at a level of from 44% to 55%.

In recent years, there has been a substantial research effort directed to reducing or eliminating the fat in various water continuous food products, such as ice cream, pourable dressings, salad dressing, mayonnaise and cheese. To produce these fat reduced products, many fat mimetic materials have been developed.

U.S. Patent No. 4,734,287 to Singer, et al. describes a proteinaceous, water-dispersible macrocolloid comprising substantially non-aggregated particles of dairy whey protein. U.S. Patent No. 4,911,946 to Singer, et al. discloses a fat substitute which comprises water-dispersable macrocolloid particles having a substantially spheroidal shape and a particle size distribution effective to impart the substantially smooth organoleptic character of an oil-and-water emulsion. The particles are produced by subjecting carbohydrate materials such as quinoa starch, konjac, mannan, chitin, schizophyllan and chitosan to high shear forces by introducing a carbohydrate solution into a highly turbulent reaction zone. This treatment produces gelled microparticles having the spheroidal shape and size described in this patent. U.S. Patent No. 5,104,674 to Chen, et al. describes fat mimetic materials which are produced by subjecting fibers of a polysaccharide gum and various protein sources to high shear forces to microfragment the particles.

While numerous fat mimetic materials have been produced, such fat mimetic materials are almost universally used in a water continuous product, such as a pourable dressing, mayonnaise or salad dressing. Only recently have attempts been made to produce a non-fat substitute for fat continuous systems, such as butter and margarine. U.S. Patent No. 4,956,193 to Cain, et al. describes a non-fat edible plastic dispersion which is a substitute for butter or margarine. The edible plastic dispersion of the Cain, et al. patent includes at least two condensed phases, at least one of which is continuous. The dispersion includes two gel forming compositions (A) and (B). Gel forming composition (A) contains 1-8 times the critical concentration of a gelling agent (a) selected from the group consisting of gelatin, kappa carrageenan, iota carrageenan, alginate, agar, gellan, pectin and mixtures thereof. Gel forming composition B also contains 1-8 times the critical concentration of a gelling agent (b) selected from the group consisting of gelling starch, denatured whey protein, denatured bovine serum protein, denatured soy protein, microcrystalline cellulose and mixtures thereof.

The present invention is directed to providing a margarine-type product based on an aqueous gel matrix with non-emulsified fat particles dispersed therein, in a manner in which the fatty mouthfeel of the product is enhanced potentiated so that it is similar to margarine-type products containing higher levels of fat.

### Summary of the Invention

The present invention is directed to a low-fat spreadable margarine-like, but water continuous gel matrix which has crystallized fat particles suspended therein. The margarine-type product of the invention includes a gelling type maltodextrin, a fat which is solid at room temperature, water and optional carbohydrate ingredients. In a method for manufacture of the edible margarine-type product, a mixture of maltodextrin, optional carbohydrate ingredients and water is provided. The mixture is heated to an elevated temperature sufficient to hydrate the maltodextrin and is held at the elevated temperature for a period long enough to assure complete dissolution of all ingredients. A fat which is solid at room temperature is added to the mixture at a temperature above the melting point of the fat. The mixture is agitated for a time sufficient to melt the fat and disperse the fat in the mixture. The mixture is then cooled under shear conditions to provide a margarine-type product which is an aqueous gelled matrix of embedded crystalline fat particles.

### Detailed Description of the Invention

The present invention is directed to a tablespread-like product which is used as a margarine substitute. The margarine-type product consists of a dispersion of crystalline fat in an aqueous gelled matrix. The gel matrix is provided through use of a gelling maltodextrin. The maltodextrin forms a continuous gel matrix which suspends fat crystals in a non-emulsified state. The fat crystals generally have a particle size of from about 1 to about 50 microns. When the matrix melts, the fat is released as free oil.

The present invention acts to potentiate the fat present in the gel matrix. The fat is potentiated in that the low levels of fat used in the margarine-type product provide the mouthfeel of much higher levels. The matrix either disperses rapidly in the mouth or melts readily on heated foods, such as toast or vegetables. When the matrix disperses or melts, the non-emulsified fat contained therein becomes immediately accessible to the oral surfaces.

Because the released fat is totally accessible, it is much more oily or fatty-feeling than a similar amount of fat which is in a tightly emulsified state. In the emulsified state, fat is in the form of droplets, several microns in diameter, covered with a layer of emulsifier molecules which effectively prevent contact of the fat with any aqueous surface, including the oral surfaces. In contrast, the released fat of the present invention tends to form oily films on aqueous surfaces. Formation of oily films not only enhances the fatty mouthfeel of the fat, but also improves its food coating functionality. The coating ability of the free fat makes it suitable for low fat baking and dough lamination.

Gelling-type maltodextrins are carbohydrate oligomers produced from a controlled enzymatic and/or acid hydrolysis of a starch. The dextrose equivalent (D.E.) of maltodextrins is very low and is generally in the range of from 1 to 20, and those that are capable of gelling are most usually in the range of from about 1 to about 8. Maltodextrins, in general, may be characterized as gelling types and as non-gelling types. The maltodextrins useful in the present invention are gelling type maltodextrins. Maltodextrins are manufactured by a process which is substantially the same as that used in the production of corn syrup, except that hydrolysis is controlled to keep the D.E. below 20. Hydrolysis can be catalyzed by use of an acid (usually HCl) or an enzyme (e.g., α-amylase). Some hydrolysis schemes use both acid, and enzyme-catalyzed hydrolysis. The maltodextrin may be chemically modified by the processes used to modify starch. An example of a gelling type maltodextrin is marketed under the tradename Paselli™ by the Avebe Company of The Netherlands. Paselli™ is a potato starch enzymatically modified to produce a maltodextrin having a D.E. below 5. The maltodextrin is used in the margarine-type products of the present invention at a level of from about 8% to about 22%, preferably at a level of from about 12% to about 20%. All percentages used herein are by weight, based on the weight of the margarine-type product, unless otherwise indicated.

The maltodextrin is blended with water to provide a mixture which is an aqueous gel matrix precursor. The water is present at a level sufficient to provide from about 38% to about 90% of water in the margarine type product. Optional carbohydrate ingredients, including polydextrose and/or gums, may be blended into the maltodextrin and water mixture prior to heating. The mixture is then heated to a temperature that is sufficient to hydrate and activate the maltodextrin. Generally, temperatures in excess of 165°F (73.9°C), and typically in the range of from about 180°F to about 200°F (about 82.2°C to about 93.3°C) are suitable.

The mixture is held at this temperature for a period of from about 1 minute to about 30 minutes, preferably from about 10 minutes to about 20 minutes, to assure complete dissolution of all carbohydrate ingredients. Following the heating step, the mixture is cooled to below 170°F (76.7°C), preferably to below 160°F (71.1°C), before incorporation of the fat and optional fat soluble ingredients. A fat that is solid at room temperature is then added to the mixture. In general, any edible solid fat can be used. The fat can be an animal fat, a hydrogenated vegetable fat or a non-digestible polyol fatty acid polyester fat substitute. A preferred animal fat is butter. Preferred hydrogenated vegetable fats are prepared from soybean oil, corn oil and cottonseed oil. The hydrogenated vegetable fat preferably has an I.V. of less than about 90, and the I.V. is preferably within the range of from about 60 to about 85. Preferred non-digestible fat substitutes are fatty acid polyesters of polyols containing four or more fatty acid ester groups, particularly fatty acid polyesters of sucrose containing five or more fatty acid esters per molecule. The preferred melting properties of the hydrogenated vegetable oils and the polyol fatty acid polyesters are similar to those of butterfat. The level of fat is low and is in the range of from about 2% to about 40%, preferably from about 5% to about 20%. The upper level of fat is limited only by the ability of the matrix to keep the fat dispersed in the water-continuous environment. Above about 40% fat, the system tends to invert or separate. Levels of fat below about 2% are suitable for carrying and modulating flavor, but have little impact on mouthfeel.

The fat is preferably melted prior to addition to the mixture of maltodextrin and water after the mixture has been heated. Optional fat-soluble ingredients, such as color and flavor ingredients, are dispersed in the melted fat before addition to the maltodextrin and carbohydrate solution. Alternatively, the fat can be added to the heated mixture in a solid form and the mixture can be used to melt the fat. The fat is dispersed by mixing the fat throughout the mixture of water and maltodextrin. The mixture may be homogenized at a pressure of from about 500 psig to about 8000 psig (about 35.5 bar to about 552.6 bar). The mixture may be pasteurized at a temperature in the range of from about 161°F to about 170°F (about 71.7°C to about 76.7°) for a period of from about 0.25 minutes to about 1.5 minutes. Initial cooling of the product is carried out under shear conditions. Because no emulsifiers are used in the formulation, the fat is not emulsified and will tend to rapidly separate from the aqueous portion. By cooling under shear conditions, the fat remains dispersed until the gel matrix has set up sufficiently to trap the solidifying fat particles and thus stabilize the dispersion. Although it is not required that the maltodextrin reach its full gel strength during this initial cooling process, it is important that it thicken and set up enough to prevent creaming of the dispersed heat exchanger, such as a Votator, which imparts enough shear to keep the fat suspended until the increased viscosity of the gel can support it.

The temperature of the product at the start of the cooling process is typically about 160°F (about 71.1°C). The initial cooling decreases the temperature of the dispersion to below about 100°F (about 37.8°C) and preferably below about 80°F (about 26.7°C). The final cooling of the product is carried out in a quiescent mode at refrigeration temperatures of from about 35°F to about 45°F (about 1.6°C to about 7.2°C). Although a firm gelled aqueous matrix with embedded fat particles is achieved after about 10 hours of refrigeration, a period of from about 2 days to about 5 days is required for the product to achieve its full gel strength.

The texture of the margarine-type product can be varied by the use of low calorie carbohydrate bulking agents, such as polydextrose and low DE corn syrup solids (DE 20-36) and gums. The texture is varied by changing the ratio of maltodextrin, bulking agent and the gum. Suitable gums include xanthan gum, kappa-carrageenan, lambda carrageenan, iota-carrageenan, alginates, carboxymethyl cellulose, and gellan gum. Carrageenan is the preferred gum. The bulking agent, if used, is present at a level of from about 5% to about 12%. The gum, if used, is generally present at a level of from about 5% to about 1.5%. Salt is also used in the margarine-type products of the present invention at a level of from about 0.5% to about 2%.

Emulsifiers are not required in the manufacture of margarine-type products of this invention. In fact, the presence of emulsifiers is detrimental to the desired firm texture of the matrix and rapid release of free oil from the dispersed fat. Textures obtained with emulsifiers, including low HLB emulsifiers, such as monoglycerides, high HLB emulsifiers such as polysorbate 60, and combinations of both, tended to be soft and creamy, lacking the "cut" or high yield stress typical of margarine-type products. The advantage of the non-emulsified system of the invention is that the fat or oil which is dispersed and trapped in the gel becomes immediately accessible to the oral surfaces when the matrix is melted or dispersed by mastication. Because the released fat is totally accessible, it is much more oily or fatty-feeling than a similar amount of fat which is emulsified.

The following examples further illustrate various features of the invention, but are intended to in no way limit the scope of the invention as set forth in the appended claims.

### Example 1

The following formulation was used to produce a margarine-type product in accordance with the invention. The formulation is set forth below in Table 1.

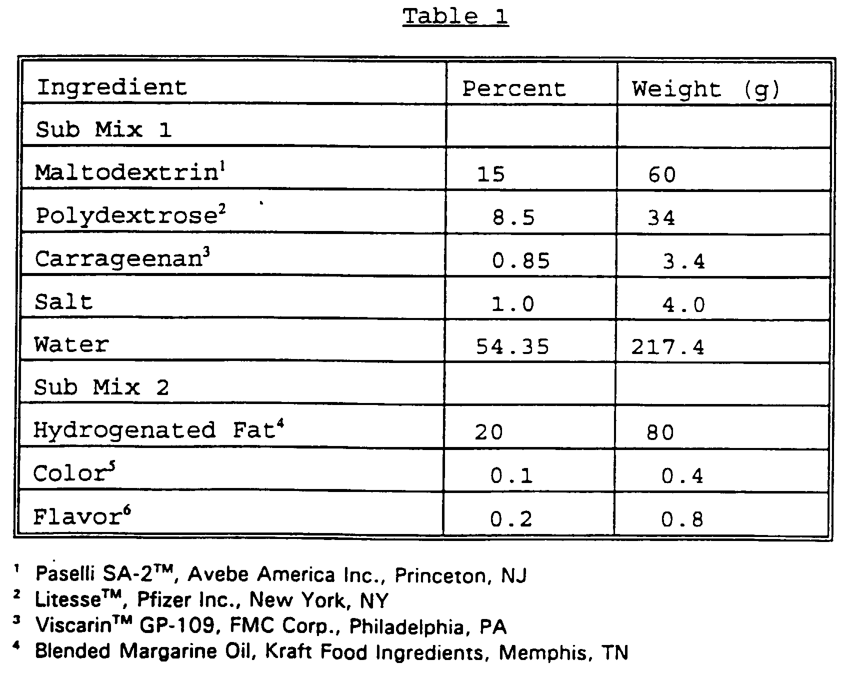

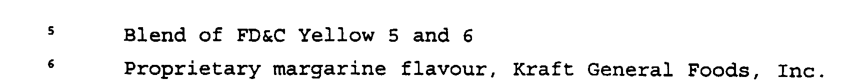

The dry ingredients of Sub Mix 1 were mixed thoroughly and slowly dispersed in water using a propeller-type (Lightning) mixer. The sample was heated on a hot-plate to a temperature of 170°F (76.7°C) with continuous mixing. The sample was then transferred to a 190°F (87.8°C) water bath. After 20 minutes in the water bath, the sample was removed and allowed to cool quiescently to 160°F (71.1°C).

The ingredients of Sub Mix 2 were combined and then mixed into Sub Mix 1 at 160°F (71.1°C) using a propeller-type (Lightning) mixer. The sample was transferred to a jacketed beaker which was chilled with a circulating water bath set at 32°F (0°C). As the product cooled, it was homogenized with a Polytron™ Homogenizer (Brinkmann Instruments Co., Westbury, NY). Homogenization was continued until the product temperature reached 80°F (26.7°C), at which time it was transferred to margarine tubs and placed in a 40°F (4.4°C) refrigerator.

After several days of refrigeration, the product was smooth and shiny in appearance with no evidence of syneresis. The texture was very smooth and cut like butter. The softening point of the product was about 140°F (60.0°C). However, the product dispersed rapidly in the mouth leaving an oily residue. The mouthfeel was smooth, firm and very greasy. It had a clean margarine flavor and rapid flavor release.

The microstructure of this product clearly shows large crystalline fat pockets embedded in the maltodextrin gel matrix.

### Example 2

The following example is intended to demonstrate the detrimental effects of emulsifiers. Low fat margarine-type products were produced according to the invention, but with the addition of emulsifiers. The formulations in weight percent are given in Table 2.

**Table 2**

| Ingredient | Sample 2a | Sample 2b | Sample 2c | Sample 2d |
|---|---|---|---|---|
| Sub Mix 1 | | | | |
| Maltodextrin¹ | 15 | 15 | 15 | 15 |
| Polydextrose² | 8.5 | 8.5 | 8.5 | 8.5 |
| Carrageenan³ | 0.85 | 0.85 | 0.85 | 0.85 |
| Salt | 1.0 | 1.0 | 1.0 | 1.0 |
| Water | 64.35 | 64.25 | 64.25 | 64.25 |

| Sub Mix 2 | | | | |
|---|---|---|---|---|
| Fat⁴ | 10 | 10 | 10 | 10 |
| Polysorbate⁷ | 0 | 0.1 | 0 | 0.1 |
| Monoglyceride⁸ | 0 | 0 | 0.1 | 0.1 |
| Color⁵ | 0.1 | 0.1 | 0.1 | 0.1 |
| Flavor⁶ | 0.2 | 0.2 | 0.2 | 0.2 |

| | | | | |
|---|---|---|---|---|
| 1 Paselli SA-2™, Avebe America Inc., Princeton, NJ | | | | |
| ² Litesse™, Pfizer Inc., New York, NY | | | | |
| ³ Viscarin™ GP-109, FMC Corp., Philadelphia, PA | | | | |
| ⁴ Blended Margarine Oil, Kraft Food Ingredients, Memphis, TN | | | | |
| ⁵ Blend of FD&C Yellow 5 and 6 | | | | |
| ⁶ Proprietary margarine flavor, Kraft General Foods, Inc. | | | | |
| ⁷ Tween 60™, ICI Americas, Wilmington, DE | | | | |
| 8 Myverol™, 18-92, Eastman Chemical Co., Kingsport, TN | | | | |

Samples were made as described in Example 1. Sample 2a was the only one which had margarine-like appearance, texture, mouthfeel and flavor. Sample 2a was very smooth and cut like butter. The appearance was shiny and smooth. It rapidly dispersed in the mouth to leave an oily residue. Samples 2b, 2c and 2d also had the appearance of margarine, with no free water, but they suffered from one or more defects. The most notable defect was the lack of an oily residue in the mouth. The samples with polysorbate had a distinct metallic off-flavor. The samples with monoglycerides lacked the firm "cut" typical of margarine. They were softer and smoother than Sample 2a, but the mouthfeel was more similar to that of a viscous salad dressing, such as mayonnaise.

### Example 3

Samples were made with and without polydextrose. The formulations in weight percent are given in Table 3.

**Table 3**

| Ingredient | Sample 3a | Sample 3b |
|---|---|---|
| Sub Mix 1 | | |
| Maltodextrin¹ | 15 | 15 |
| Polydextrose² | 8.5 | 0 |
| Carrageenan³ | 0.85 | 0.85 |
| Salt | 1.0 | 1.0 |
| Water | 54.35 | 62.85 |

| Sub Mix 2 | | |
|---|---|---|
| Hydrogenated Fat⁴ | 20 | 80 |
| Color⁵ | 0.1 | 0.1 |
| Flavor⁶ | 0.2 | 0.2 |

| | | |
|---|---|---|
| ¹ Paselli SA-2™, Avebe America Inc., Princeton, NJ | | |
| ² Litesse™, Pfizer Inc., New York, NY | | |
| ³ Viscarin™ GP-109, FMC Corp., Philadelphia, PA | | |
| ⁴ Blended Margarine Oil, Kraft Food Ingredients, Memphis, TN | | |
| ⁵ Blend of FD&C Yellow 5 and 6 | | |
| ⁶ Proprietary margarine flavor, Kraft General Foods, Inc. | | |

Samples were made as described in Example 1. The sample made with polydextrose (3a) had all of the attributes of margarine described in Example 1. It had good, smooth appearance, with no syneresis. Its mouthfeel was smooth, firm, very greasy, not at all pasty. In contrast to Sample 3a, Sample 3b showed the appearance of free water (syneresis) at the cut surfaces. Although it was smooth in the mouth, it was also slightly pasty, lacking the greasy, oily feel of Sample 3a. In addition, although Sample 3b dispersed rapidly in the mouth to release both free oil and flavor, the salty taste was much more intense than that of Sample 3a.

### Example 4

Samples were made with various maltodextrin blends. The formulations in weight percent are given in Table 4.

**Table 4**

| Ingredient | Sample 4a | Sample 4b | Sample 4c | Sample 4d |
|---|---|---|---|---|
| Sub Mix 1 | | | | |
| Maltodextrin¹ | 15 | 12.5 | 10 | 7.5 |
| Maltodextrin² | 0 | 2.5 | 5 | 7.5 |
| Polydextrose³ | 8.5 | 8.5 | 8.5 | 8.5 |
| Carrageenan⁴ | 0.85 | 0.85 | 0.85 | 0.85 |
| Salt | 1.0 | 1.0 | 1.0 | 1.0 |
| Water | 64.35 | 64.35 | 64.35 | 64.35 |

| Sub Mix 2 | | | | |
|---|---|---|---|---|
| Fat⁵ | 10 | 10 | 10 | 10 |
| Color⁶ | 0.1 | 0.1 | 0.1 | 0.1 |
| Flavor⁷ | 0.2 | 0.2 | 0.2 | 0.2 |

| | | | | |
|---|---|---|---|---|
| ¹ Paselli SA-2™, Avebe America Inc., Princeton, NJ | | | | |
| ² Stellar™, Staley Mfg. Co., Decatur, IL | | | | |
| ³ Litesse™, Pfizer Inc., New York, NY | | | | |
| ⁴ Viscarin™ GP-109, FMC Corp., Philadelphia, PA | | | | |
| ⁵ Blended Margarine Oil, Kraft Food Ingredients, Memphis, TN | | | | |
| ⁶ Blend of FD&C Yellow 5 and 6 | | | | |
| ⁷ Proprietary margarine flavor, Kraft General Foods, Inc. | | | | |

Samples were made as described in Example 1, except that the temperature of Sub Mix 1 was brought to 190°F (87.8°C) and held at that temperature for the full 20 minutes. This was necessary to achieve complete dissolution of the second maltodextrin. In general, all products were acceptable as margarine-type products, although the firmness of the products was affected by the use of different maltodextrins. The firmness was measured using a Voland-Stevens Texturometer. This Texturometer was equipped with a 45° cone which penetrated the samples to a depth of 10 mm at a rate of 2 mm/sec. Measurements were taken after 2 days and 5 days of refrigeration. Readings represent force in grams needed to penetrate the sample.

| Sample | Force (g) at 2 days | Force (g) at 5 days |
|---|---|---|
| 3a | 54 | 78 |
| 3b | 40 | 57 |
| 3c | 19 | 26 |
| 3d | 50 | 61 |

From these results, it is apparent that by varying the ratios of different maltodextrin ingredients, it is possible to control the firmness of the finished product.

### Example 5

Samples were made with amounts of maltodextrin and then used to make low fat croissants. Formulations in weight percent are given in Table 5.

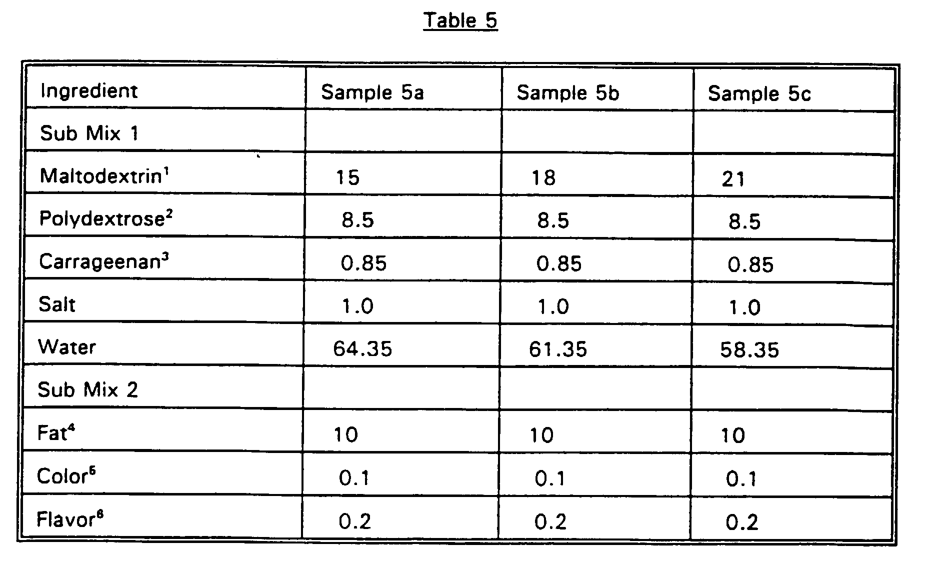

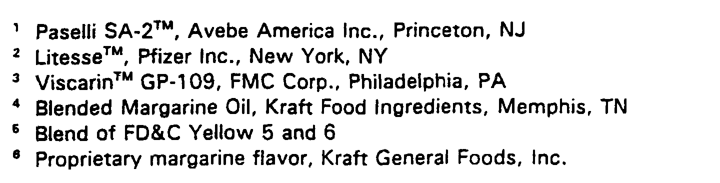

Samples were made as described in Example 1. Firmness was measured using a Voland-Stevens Texturometer as described in Example 4. Measurements were taken after only 1 day of refrigeration.

| Sample | Force (g) |
|---|---|
| 5a | 22 |
| 5b | 50 |
| 5c | 148 |

Each of these samples were used to make layered dough. Sample 5c was judged to be the best for layering dough to make low-fat croissants because its firmness was most similar to that of refrigerated margarine. However, all of the margarine-type products succeeded in producing the desired layering effects, although the layers were not as crisp as they were when conventional margarine was utilized. Nevertheless, this example demonstrates the ability of the invention to function as a layering agent in croissant applications.

## Claims

1. A low-fat spreadable margarine-type product having a continuous gel matrix, said margarine-type product comprising a gelling type maltodextrin, a fat which is solid at room temperature and water, said margarine-type product being a continuous gelled matrix having said fat embedded therein in the form of crystalline fat particles.

2. A margarine-type product according to claim 1, wherein the fat level is from about 2% to about 40%.

3. A margarine-type product according to claim 2, wherein the fat level is from about 7% to about 20%.

4. A margarine-type product according to any one of claims 1 to 3, wherein said maltodextrin has a D.E. in the range of from about 1 to about 8.

5. A margarine-type product according to any one of claims 1 to 4, wherein said maltodextrin is present at a level of from about 8% to about 22%.

6. A margarine-type product according to any one of claims 1 to 5, wherein said maltodextrin is present at a level of from about 12% to about 20%.

7. A margarine-type product according to any one of claims 1 to 6, which further comprises polydextrose and a sweetening effect is provided by one or more artificial sweeteners.

8. A margarine-type product according to claim 7, wherein said polydextrose is present in said composition at a level of from about 5% to about 12%.

9. A margarine-type product according to any one of claims 1 to 8, wherein said fat is selected from animal fats, hydrogenated vegetable oils and polyol fatty acid polyesters.

10. A margarine-type product according to any one of claims 1 to 9, wherein said water is present at a level of from about 38% to about 90%.

11. A margarine-type product according to any one of claims 1 to 10, wherein said crystallized fat has a particle size of from about 1 micron to about 50 microns.

12. A method for manufacture of an edible margarine-type product comprising:
(a) providing a mixture of maltodextrin and water;
(b) heating said mixture to an elevated temperature of from about 180°F to about 200°F (about 82.2°C to about 93.3°C);
(c) holding said mixture at said elevated temperature for a period of from about 1 minute to about 30 minutes;
(d) adding a fat which is solid at room temperature to said mixture and agitating said mixture for a time sufficient to melt said fat and disperse said fat in said mixture; and
(e) cooling said mixture with shear to provide a margarine-type product which is an aqueous gelled matrix of embedded crystallized fat particles.

13. A method according to claim 12, wherein said mixture is cooled to a temperature of from about 150°F to about 160°F (about 65.6°C to about 71.1°C) prior to adding said fat.

14. A method according to claim 12 or claim 13, wherein the fat level is from about 2% to about 40%.

15. A method according to claim 14, wherein the fat level is from about 7% to about 20%.

16. A method according to any one of claims 12 to 15, wherein said maltodextrin has a D.E. in the range of from about 1 to about 8.

17. A method according to any one of claims 12 to 16, wherein said maltodextrin is present at a level of from about 8% to about 22%.

18. A method according to claim 17, wherein said maltodextrin is present at a level of from about 12% to about 17%.

19. A method according to any one of claims 12 to 18, wherein said fat is selected from animal fats, hydrogenated vegetable oils and polyol fatty acid polyesters.

20. A method according to any one of claims 12 to 19, wherein said water is present at a level of from about 38% to about 90%.

21. A method according to any one of claims 12 to 20, wherein said crystallized fat has a particle size in the range of from about 1 micron to about 50 microns.
